Europäisches Patentamt

European Patent Office

Office européen des brevets

(11) Publication number: **0 156 421**
**B1**

(12)        EUROPEAN PATENT SPECIFICATION

(45) Date of publication of patent specification: 25.01.89   (51) Int. Cl.⁴: **C 01 C 3/16, B 01 J 35/10**

(21) Application number: **85200320.1**

(22) Date of filing: **05.03.85**

(54) Process for preparing cyanamide.

(30) Priority: **06.03.84 NL 8400717**

(43) Date of publication of application:
**02.10.85 Bulletin 85/40**

(45) Publication of the grant of the patent:
**25.01.89 Bulletin 89/04**

(84) Designated Contracting States:
**AT BE CH DE FR GB IT LI NL SE**

(56) References cited:
**EP-A-0 086 543**
**DE-C-1 028 126**
**FR-A-1 112 844**
**US-A-2 721 786**
**US-A-2 760 961**
**US-A-2 783 131**

**O. GRUBNER et al.: "Molekularsiebe", vol. 12, 1968, pages 85, 86, 151, VEB Deutscher Verlag der Wissenschaften, Berlin, DE;**

(73) Proprietor: **STAMICARBON B.V.**
**Mijnweg 1**
**NL-6167 AC Geleen (NL)**

(72) Inventor: **van Hardeveld, Rudolf**
**Vondellaan 15**
**NL-6165 EB Geleen (NL)**
Inventor: **van de Mond, Theodorus Johannes**
**Oranjelaan 10**
**NL-6166 BR Geleen (NL)**
Inventor: **VandenBooren, Franciscus Henricus A. M. J.**
**Veulenerbank 31**
**NL-6213 JR Maastricht (NL)**

Courier Press, Leamington Spa, England.

**Description**

The invention relates to a process for preparing cyanamide by passing urea and/or urea decomposition products at a temperature between 200°C and 600°C over a catalyst provided with pores.

From the US patent specification 2,721,786 is it known how to prepare cyanamide on the basis of ammonia and carbon dioxide at temperatures between 350°C and 800°C in the presence of a gel of an inorganic oxide with a large surface.

The US patent specification 2,760,961 describes the preparation of mixtures of cyanamide and its trimer melamine on the basis of urea or biuret at a temperature of at least 220°C while using silica gel or another oxide gel of an amphoteric element as catalyst. This catalyst must have a large internal surface and/or volume and the pores of the catalyst may have dimensions ranging from 60 to $70.10^{-10}$m (Å), but they may also be larger or smaller.

From the published German patent application 1,028,126 such a process is known also.

In all these processes a not inconsiderable amount of melamine is formed in addition to cyanamide. This is not surprising, since the chemical reaction equilibrium of the trimerization of cyanamide to melamine benefits the formation of melamine. If cyanamide is the desired product, this secondary product of melamine is a great nuisance.

That is why processes are sought in which the formation of melamine is inhibited, resp. the formation of cyanamide is promoted.

In the US patent specification 2,783,131 it is stated that a reaction temperature of 450°C—650°C or even higher must be applied if cyanamide is the desired product. Even under these conditions there is no optimum yield of cyanamide.

The object of the present invention is to provide a process for preparing cyanamide with a high conversion in which only a minor amount of melamine is formed, without having to work under extreme reaction conditions.

Surprisingly it has now been found that the use of a catalyst with a uniform intracrystalline pour diameter not higher than $8 .10^{-10}$m (Å) has a favourable effect on the formation of cyanamide, resp. a negative effect on the formation of melamine. A uniform intracrystalline pore diameter of at least $3.10^{-10}$m (Å) has been found to have a positive effect on the conversion into cyanamide.

The invention is therefore characterized by the use of a catalyst whose intracrystalline pore diameter is $8.10^{-10}$m (Å) at most. 'Intracrystalline pore diameter' is understood to mean the dimension of the pores as described by D. W. Breck in Zeolite, Molecular Sieves, Chapter 8C (publ. J. Wiley & Sons, New York, 1974).

This pore diameter can be determined by presenting for absorption molecules with known different dimensions and by watching to what size absorption actually occurs.

The formation of cyanamide takes place with added advantage when the intracrystalline pore diameter is at least $4.10^{-10}$m (Å) and at most $6.10^{-10}$m (Å) and in particular at most $5.10^{-10}$m (Å).

Within these limits the highest conversion of urea and/or its decomposition products is obtained with a very low formation of byproducts.

As catalyst various kinds of materials can be used, provided the requirements imposed in respect of the intracrystalline pore diameter are complied with. Materials are used having in their crystal structure pores of the desired diameter, or pores that can be reduced or enlarged to the desired diameter.

The reduction of the intracrystalline pore diameter can be effected by absorbing metal ions in the crystal structure. Preference is given in that process to using metal ions that do not deactivate the catalytically active positions. Suitable metals can be found in groups II A, II B, III B and VIII of the periodic system of the elements.

More specifically ions of magnesium, calcium, iron, nickel, zinc and the varous lanthanides are suitable.

It is possible also to exchange the cations present on the catalyst for larger cations of the same valency. An exchange with smaller cations will make the pores large.

More exchange with smaller cations will make the pores large.

More specifically preference is given in the process according to the invention to the use of natural or synthetic zeolites, or to crystalline materials with a zeolite structure.

Zeolites are crystalline aluminosilicates whose crystalline structure surrounds a pore system that may be filled wholly or partly with water or cations. An example thereof is an aluminium-silicon-oxygen compound whose crystalline structure consists of a tetrahedral pile of oxygen molecules. In the lattice vacancies silicon or aluminium may be present.

It is possible also to use a material in which the aluminium has been replaced in whole or in part by boron.

The material will then have a zeolite structure.

In the pores formed by the crystal lattice the catalytically active position are present. More specifically these are acid positions.

It is an advantage to use a catalyst having catalytically active positions in the pores only. If the outer surface also contains catalytically active positions, undesired secondary reactions occur. Preference is therefore given to using a catalyst having an inert outer surface. A process for preparing such a catalyst is described in the European patent application no. 86543 laid open to public inspection.

The catalyst can be used as such, but in certain embodiments it may be useful for the catalyst to be applied to or to be mixed with an inert binder or a binder rendered inert. This may be done, for instance, in order to obtain a pellet-shaped catalyst. Examples of suitable binders are silica, silica-alumina, various clays and carbon.

One of the advantages of the process according to the inventions, compared with the process according to the US patent specification no. 2,783,131 is that it is possible for cyanamide to be prepared at substantially lower temperatures while retaining a high degree and range of conversion.

Energetically this has, of course, a cost-saving effect. Owing to the possibility of working at lower temperature, it will suffice to use less corrosion-resistant materials. This is an advantage from an investment point of view. However, the possibility of working at high temperatures is not ruled out. Then the advantage is a very high rate of reaction, so that relatively short residence times and consequently relatively small equipment will suffice.

Another advantage of the process according to the invention is the high selectivity of the reaction, so that few undesired by-products are formed. Hence a relatively unsophisciton separation of by-products will suffice.

The cyanamide can be prepared by introducing urea and/or decompositon products thereof, such as cyanic acid or isocyanic acid, at temperatures between 200 and 600°C into a reactor in which the catalyst is present. This catalyst can be present in the reactor for instance in the form of a fixed or fluid bed of catalyst particles. The form in which the catalyst is present is determined substantially by aspects of process technology, such as heat and material transfer, residence time, strength of the catalyst particles and the like.

When applying temperatures higher than about 300°C, preference is given a fluid bed of catalyst particles, into which fluid bed the required heat is introduced via heating coils heated electrically or with melted salt.

Preferably urea and/or its decomposition products are introduced into the reactor by means of a carrier gas. More specifically melted urea may be started from, which is sprayed into a fluid bed cracker or into a tubular reactor by means of a carrier gas while being simultaneously heated, so that cyanic acid or isocyanic acid is formed.

This mixture is successively passed into the catalyst containing reactor.

The eligible carrier gas may comprise all kinds of gases that do not interfere with the formation of cyanamide. Examples of such gases or gas mixtures are ammonia, nitrogen, carbon dioxide, the various nobel gases or mixtures of such gases.

Preference is given to ammonia, because in the reaction from urea to cyanic acid or isocyanic acid, too, ammonia is released. By using ammonia as the carrier gas, an extra separation step can be omitted.

It is an advantage for the proportion between the amount of carrier gas (in normal litres, i.e. at 0°C and 1 bar) and the amount of urea (in grammes) to be 0.5 to 10 (normal litre/g).

The residence time of the reaction mixture in the reactor may range from less than 0,1 second to a few minutes, for instance from 0.01 sec. to 10 minutes, more specifically from 0,1—30 seconds. The residence time is determined particularly by the number of active positions in the catalyst, the partial pressure of the starting materials (cyanic acid and isocyanic acid) in the reactor and the temperature.

Generally the said partial pressure will be chosen between 0.1 and 3 bar.

The total pressure in the reactor is not critical. The upper limit is determined by the fact that there must be no uncatalyzed formation of melamine. Generally this pressure will be between 0.1 and 50 bar.

The reaction mixture obtained from the reactor contains cyanamide, carbon dioxide and ammonia. In addition the mixture may contain minor amounts of by-product and non-converted cyanic acid. If a carrier gas other than ammonia is used, that carrier gas will also be present in the reaction mixture.

From this reaction mixture cyanamide can be recovered, for instance by extraction with ether.

The carrier gas can be recirculated in whole or in part, optionally after complete or partial purification. It is possible also to have the cyanamide dimerized to form dicyandiamide and subsequently to recover this by crystallization.

The invention will now be elucidated by means of a few examples.

In the examples the starting product that was started from was isocyanic acid (HNCO). This was prepared by supplying urea and ammonia to a fluid bed cracker in a proportion indicated in column 2 of the table. The HNCO thus formed was supplied to a fluid bed reactor under a partial pressure as indicated in column 3 of the table. The moment of sampling after commencement of the experiment is given in column 4 and the temperature at which the reaction took place in column 5. Column 6 shows the conversion percentage. Columns 7 and 8 give the percentages of respectively melamine and cyanamide found in a sample, as determined by means of liquid chromatography. The residence time is given in column 9.

The following catalyst were used.

Comparative example A: 10 grammes activated carbon Example 1: 10 grammes mordenite $H^+$ having a pore size $\leqslant 5.10^{-10}$m (Å)

Example 2: 50 grammes mordenite $H^+$ having a pore size $\leqslant 5.10^{-10}$m (Å).

Comparative examples D and E: 10 grammes mordenite $H^+$ having a pore size $8.10^{-10}$m (Å).

Examples 3 up to and including 6: 40 grammes mordenite $H^+$ having a pore size $\leqslant 5.10^{-10}$m (Å), the outer surface of which has been made inert by cation exchange ($H^+ \rightarrow Na^+$).

3

# EP 0 156 421 B1

TABLE

| (Comparative) example | A normal litre NH$_3$/g urea | P$_{HNCO}$ bar | t h | T °C | conversion % | melamine % | cyanamide % | residence time sec. |
|---|---|---|---|---|---|---|---|---|
| A | 2.39 | 0.119 | 1 | 400 | 2.6 | 26.9 | 73.1 | 0.22 |
| 1 | 4.0 | 0.062 | 1 | 390 | 9.0 | 1.1 | 98.9 | 0.18 |
| 2 | 4.4 | 0.060 | 1 | 390 | 27.4 | 28.5 | 71.5 | 1.13 |
| B | 2.13 | 0.133 | 1 | 380 | 19.9 | 70.3 | 29.7 | 0.21 |
| C | 2.13 | 0.133 | 3 | 420 | 22.7 | 66.1 | 33.9 | 0.23 |
| D | 2.06 | 0.133 | 1 | 380 | 7.6 | 11.9 | 88.1 | 0.15 |
| E | 2.06 | 0.133 | 3 | 400 | 8.9 | 15.7 | 84.3 | 0.15 |
| 3 | 4.4 | 0.060 | 1 | 390 | 36.3 | 10.7 | 89.3 | 0.91 |
| 4 | 4.4 | 0.060 | 3 | 390 | 34.1 | 9.7 | 90.3 | 0.91 |
| 5 | 2.9 | 0.083 | 2 | 415 | 33.3 | 23.7 | 76.3 | 1.89 |
| 6 | 2.9 | 0.083 | 3 | 390 | 28.1 | 17.4 | 82.6 | 1.82 |

**Claims**

1. Process of preparing cyanamide or a cyanamide-containing gas mixture by passing urea and/or urea decomposition products at a temperature between 200°C and 600°C over a catalyst provided with pores, characterized in that a catalyst is used whose intracrystalline pore diameter is a $8.10^{-10}$m (Å) at most.

2. Process according to claim 1, characterized in that a catalyst is used having an intracrystalline pore diameter of at least $3.10^{-10}$m (Å).

3. Process according to claim 2, characterized in that a catalyst is used having an intracrystalline pore diameter of at least $4.10^{-10}$m (Å) and at most $6.10^{-10}$m (Å).

4. Process according to claim 3, characterized in that the intracrystalline pore diameter is $4$—$5.10^{-10}$m (Å).

5. Process according to any one of claims 1—4, characterized in that an acid catalyst is applied.

6. Process according to any one of claims 1—5, characterized in that the catalyst applied is a zeolite.

7. Process according to any one of claims 1—6, characterized in that a catalyst is used whose desired effective pore size has been obtained by having cations absorbed on the catalyst.

4

8. Process according to any one of claims 1—7, characterized in that a catalyst is used with an outer surface rendered inert.

9. Process according to claim 8, characterized in that a catalyst is used with an outer surface rendered inert by cation exchange.

**Patentansprüche**

1. Verfahren zum Herstellen von Cyanamid oder einer Cyanamidhaltigen Gasmischung, indem Harnstoff und/oder Harnstoffzersetzungsprodukte bei einer Temperatur zwischen 200 und 600°C über einen mit Poren versehenen Katalysator geleitet werden, dadurch gekennzeichnet, daß ein Katalysator verwendet wird, dessen intrakristalliner Porendurchmesser höchstens $8.10^{-10}$ m (Angström) beträgt.

2. Verfahren nach Anspruch 1, dadurch gekennzeichnet, daß ein Katalysator mit einem intrakristallinen Porendurchmesser von mindestens $3.10^{-10}$ m (Angström) verwendet wird.

3. Verfahren nach Anspruch 2, dadurch gekennzeichnet, daß ein Katalysator mit einem intrakristallinen Porendurchmesser von mindestens $4.10^{-10}$ m (Angström) und höchstens $6.10^{-10}$ m (Angström) verwendet wird.

4. Verfahren nach Anspruch 3, dadurch gekennzeichnet, daß der intrakristalline Porendurchmesser 4 bis $5.10^{-10}$ m (Angström) beträgt.

5. Verfahren nach einem der Ansprüche 1 bis 4, dadurch gekennzeichnet, daß ein Säurekatalysator verwendet wird.

6. Verfahren nach einem der Ansprüche 1 bis 5, dadurch gekennzeichnet, daß der verwendete Katalysator ein Zeolith ist.

7. Verfahren nach einem der Ansprüche 1 bis 6, dadurch gekennzeichnet, daß ein Katalysator verwendet wird, dessen erwünschte effektive Porengröße durch Absorbieren von Kationen an den Katalysator erzielt wurde.

8. Verfahren nach einem der Ansprüche 1 bis 7, dadurch gekennzeichnet, daß ein Katalysator verwendet wird, dessen Außenfläche inert gemacht wurde.

9. Verfahren nach Anspruch 8, dadurch gekennzeichnet, daß ein Katalysator verwendet wird, dessen Außenfläche durch Kationenaustausch inert gemacht wurde.

**Revendications**

1. Procédé de préparation de cyanamide ou d'un mélange gazeux contenant du cyanamide consistant à faire passer de l'urée et/ou des produits de décomposition d'urée à une température comprise entre 200 et 600°C sur un catalyseur présentant des pores, caractérisé en ce qu'on utilise un catalyseur dont le diamètre des pores intercristallins ne dépasse pas $8 \times 10^{-10}$m (Å).

2. Procédé selon la revendication 1, caractérisé en ce qu'on utilise un catalyseur ayant un diamètre de pores intercristallins d'au moins $3 \times 10^{-10}$m (Å).

3. Procédé selon la revendication 2, caractérisé en ce qu'on utilise un catalyseur ayant un diamètre de pores intercristallin d'au moins 4 et au plus de $6 \times 10^{-10}$m (Å).

4. Procédé selon la revendication 3, caractérisé en ce que le diamètre de pores intercristallins est de 4 à $5\ 10^{-10}$m (Å).

5. Procédé selon l'une quelconque des revendications 1 à 5, caractérisé en ce que le catalyseur utilisé est acide.

6. Procédé selon l'une quelconque des revendications 1 à 5, caractérisé en ce que le catalyseur utilisé est une zéolite.

7. Procédé selon l'une quelconque des revendications 1 à 6, caractérisé en ce qu'on utilise un catalyseur dont la grosseur réelle désirée des pores a été obtenue en faisant absorber des cations par le catalyseur.

8. Procédé selon l'une quelconque des revendications 1 à 7, caractérisé en ce qu'on utilise un catalyseur ayant une surface externe rendue inerte.

9. Procédé selon la revendication 8, caractérisé en ce qu'on utilise un catalyseur dont la surface externe est rendue inerte par échange cationique.